# EUROPÄISCHE PATENTSCHRIFT

(11) **EP 3 337 734 B1**
(45) Veröffentlichungstag und Bekanntmachung des Hinweises auf die Patenterteilung: **04.03.2020**
(21) Anmeldenummer: 16738707.5
(22) Anmeldetag: 05.07.2016
(51) Int. Cl.: B65D 75/58

(54) **AUSLASSSTUTZEN MIT EINEM AUSKRAGENDEN FLANSCH UND SCHLAUCHBEUTEL DAMIT**
OUTLET CONNECTOR PIECE HAVING A PROTRUDING FLANGE AND BAG THEREWITH
EMBOUT VERSEUR POURVU D'UN FLASQUE SAILLANT ET SACHET MUNI D'UN TEL EMBOUT

(30) Priorität: 20.08.2015 DE 102015215864
(43) Veröffentlichungstag der Anmeldung: 27.06.2018
(73) Patentinhaber: Robert Bosch GmbH, 70442 Stuttgart (DE)
(72) Erfinder: BARRON, Dan, CH-8200 Schaffhausen (CH)
(74) Vertreter: Daub, Thomas
(86) Internationale Anmeldenummer: PCT/EP2016/065802
(87) Internationale Veröffentlichungsnummer: WO 2017/029014

(56) Entgegenhaltungen:
- WO-A1-2015/058933
- BE-A- 451 380
- DE-A1- 19 942 035
- JP-A- H10 236 491

## Beschreibung

Die Erfindung betrifft einen Auslassstutzen mit einem auskragenden Flansch zur nicht-lösbaren Befestigung mittels Schweissen oder Kleben auf einem Schlauchbeutel nach Patentanspruch 1.

### Stand der Technik

Beispielsweise im Nahrungsmittelversorgungsbereich müssen heutzutage sehr grosse Mengen von viskosen Produkten zwecks Einhaltung von hygienischen Bedingungen in sogenannten Schlauchbeuteln geliefert werden. Diese Schlauchbeutel sind flexible Behälter aus Kunststoff bei denen oftmals auch eine Ausgabevorrichtung zum Beispiel in der Form einer Dosierpumpe auf einen Auslassstutzen aufsetzbar ist und die in der Gesamtheit aus Hygienegründen für den Einmalgebrauch vorgesehen sind.

Auslassstutzen der hier beschriebenen Art werden meist erst nach der Herstellung des Schlauchbeutels auf demselben angebracht, in der Regel durch Aufschweissen oder Aufkleben des auskragenden Flansches auf das flexible Material des Schlauchbeutels. Der Schlauchbeutel selbst bleibt bei diesem Vorgang an der Anbringstelle jedoch intakt, und er bleibt es auch bis zur effektiven Entnahme bzw. Entleerung des Schlauchbeutelinhalts.

Das Problem ist effektiv die Qualität der Materialverbindung bzw. die Abreissfestigkeit des aufgeschweissten oder aufgeklebten Flansches. Situationen, bei denen die Abreissfestigkeit des Flansches auf die Probe gestellt ist, ergeben sich nicht nur bei Transport, Lagerung und Handling der gefüllten Schlauchbeutel, sondern auch beim Vorgang der Entleerung selbst. Unterschiede bestehen darin, dass beim Ersteren die Schlauchbeutel im Auslassstutzenbereich noch intakt sind, beim Letzteren aber nicht mehr, weil das flexible Material der Schlauchbeutel ja erst zum Zweck der Entleerung im Auslassstutzen penetriert wird. Falls an den Schweiss- oder Klebestellen infolge von Qualitätsmängeln oder zufolge mangelnder Abreissfestigkeit beim Entleerungsprozess Undichtigkeiten auftreten, besteht natürlich die Gefahr der Kontaminierung des Schlauchbeutelinhalts. Langsame Entleervorgänge dürften deutlich stärker gefährdet sein als schnelle Entleervorgänge.

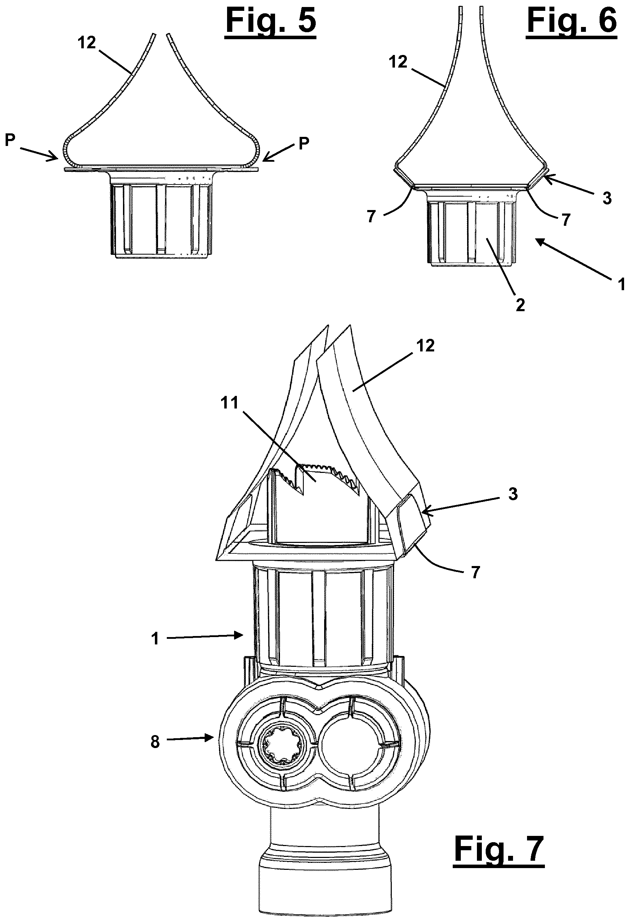

Wie erwähnt, kann der Entleervorgang selbst die Abreissfestigkeit des Auslassstutzens ebenfalls auf die Probe stellen. Neben der reinen Schwerkraftentleerung werden zunehmend pumpen- und/oder kraftunterstützte Entleerungshilfen eingesetzt. Dabei können Dosierpumpen eingesetzt werden, die den Inhalt der Schlauchbeutel leersaugen oder es können mechanische Hilfseinrichtungen zum Auspressen der Schlauchbeutel vorhanden sein. Beim Aussaugen entstehende Knitterfalten am Schlauchbeutel oder beim Auspressen entstehende Verformungen können jedoch bewirken, dass sich der auf dem Schlauchbeutel aufgeschweisste oder aufgeklebte Flansch des Auslassstutzens in den Randbereichen zumindest teilweise vom Schlauchbeutel weggeschält. Naturgemäss sind genau die Randbereiche des Flansches am stärksten gefährdet, weil die Schälkräfte dort am grössten sind. In den zum Ausführungsbeispiel der Erfindung gehörenden Zeichnungen (vgl. dazu Fig. 5) wird diese Wirkung noch veranschaulicht.

Es handelt sich somit um ein in der Branche an sich bekanntes Problem in einer Übergangszone, das noch verstärkt wird, weil der Auslassstutzen selbst relativ fest und formstabil bleiben muss, der Schlauchbeutel selbst aber beabsichtigterweise dünn und elastisch ist.

Die vorliegende Erfindung eignet sich besonders gut zum Einsatz bei Standard-Schlauchbeuteln, beschränkt sich aber nicht auf solche. Mit Standard-Schlauchbeuteln sind im Wesentlichen rechteckige Schlauchbeutel gemeint, deren Herstellung und Befüllung relativ einfach und auch wohlbekannt ist und die deshalb auch in grösserem Umfang eingesetzt werden. Bei derartigen Standard-Schlauchbeuteln ist der Anschlussstutzen an einem der Ränder, häufig am unteren Rand, angebracht, weil man ja möchte, dass bei einem in Gebrauchslage in eine Ausgabevorrichtung eingesetzten Standard-Schlauchbeutel der Anschlussstutzen an den untersten Punkt zu liegen kommt, um so die bestmögliche Entleerbarkeit zu erzielen. Ein Beispiel dazu kann etwa der WO2015058933A1 entnommen werden.

Die US-2011/0062192 zeigt eine Lösung, bei der man versucht, die Abreissfestigkeit der Verbindung zwischen dem Auslassstutzen und dem flexiblen Folienmaterial des Schlauchbeutels durch ein am Auslassstutzen angeformtes Zwischenteil (Interface) von spezieller Formgebung zu verbessern. Die gezeigte Form erscheint im Wesentlichen schiffchenartig und stellt (im Vergleich zur Dimension des Ausgussstutzens) relativ grosse seitliche Verbindungsflächen zur Verfügung. Ebenfalls ersichtlich sind flexible Fortsätze (appendages), die an der schiffchenartigen Form angebracht sind und zur Verteilung der auftretenden Kräfte dienen. Letztere werden als SDFs (Stress Delocalization Features) bezeichnet. Nachteilig erscheinen die relativ komplexe Form und die relativ aufwendige Art der Befestigung am Schlauchbeutel.

Die EP-0414992 zeigt eine weitere Lösung für Folienbehälter, bei der ein Spundteil des Auslassstutzens aus einem formstabilen Material, ein mit dem Spundteil verbundenes Flanschteil aber aus einem nachgiebigen und schweissbaren Kunststoff gefertigt ist. Nachteilig erscheint hier, dass der Ausgussstutzen als Ganzes mehrteilig ist, also aus verschiedenartigen Kunststoffen besteht und somit aufwendig in der Herstellung ist, und dass die eigentliche Verbindungsfläche zwischen dem Auslassstutzen und dem flexiblen Folienmaterial des Schlauchbeutels doch relativ klein ist, weshalb anzunehmen ist, dass die Abreissfestigkeit möglicherweise ungenügend ist.

### Offenbarung der Erfindung

Es ist deshalb Aufgabe der Erfindung, einen Auslassstutzen anzugeben, der neben einfacherer Herstellbarkeit und einfacher Befestigbarkeit am Schlauchbeutel eine verbesserte Abreissfestigkeit aufweist.

Diese Aufgabe wird durch die Merkmalskombination des Patentanspruchs 1 gelöst.

Die Lösung beinhaltet im Wesentlichen, dass das Flanschteil Folienscharniere aufweist.

Eine den nächstliegenden Stand der Technik bildende Lösung ist aus dem Dokument WO2013/135434 bekannt, wie im Oberbegriff des Patentanspruches 1 wiedergegeben ist.

Aus der JP-H10236491 ist ein Auslassstutzen mit einem im nicht montierten Zustand auskragenden Flansch zur nicht-lösbaren Befestigung in einem Schlauchbeutel bekannt. Im montierten Zustand bildet der Flansch ein Schulterteil des Schlauchbeutels und liegt nun nicht auf dem Schlauchbeutel, sondern im Schlauchbeutel. Der Flansch ist mit zwei Gehrungsfalzen geformt, deren Gehrungsflächen im montierten Zustand aufeinander zu liegen kommen, und die so gebildete Schulter gibt dem Schlauchbeutel die gewünschte Form und Stabilität.

Die Vorteile bestehen unter anderen darin, dass der Peeling- oder Abschäleffekt (Aufreissen der Schweiss- oder Klebeverbindung zwischen dem Auslassstutzen und dem flexiblen Folienmaterial des Schlauchbeutels) an den Randstellen stark reduziert werden kann. Damit eignen sich derart ausgestaltete Schlauchbeutel auch wesentlich besser für Ausgabe- oder Dosiereinrichtungen bei denen die vollständige Entleerung noch zusätzlich mit mechanischen Hilfsvorrichtungen, also z.B. Auspresshilfen, unterstützt wird.

Im Weiteren wird eine Ausführungsform der vorliegenden Erfindung anhand von Zeichnungen näher erläutert. Dabei zeigen
- Fig. 1: eine räumliche Ansicht eines erfindungsgemässen Auslassstutzens,
- Fig. 2: den Auslassstutzen von Fig. 1 in einer Ansicht von unten und von der Seite,
- Fig. 3: den Auslassstutzen von Fig. 1 und eine auf den Auslassstutzen aufsetzbare Einwegpumpe vor dem Zusammenbau,
- Fig. 4: den Auslassstutzen von Fig. 1 an einem Schlauchbeutel mit aufgesetzter Einwegpumpe von Fig. 3,
- Fig. 5: einen Auslassstutzen ohne die erfindungsgemässen Merkmale zur Veranschaulichung des Peeling-Effekts,
- Fig. 6: den Auslassstutzen von Fig. 1 zur Veranschaulichung der Vermeidung des Peeling-Effekts, und
- Fig. 7: den Auslassstutzen von Fig. 1 an einem Schlauchbeutel mit aufgesetzter Einwegpumpe von Fig. 3 zur weiteren Veranschaulichung der Vermeidung des Peeling-Effekts.

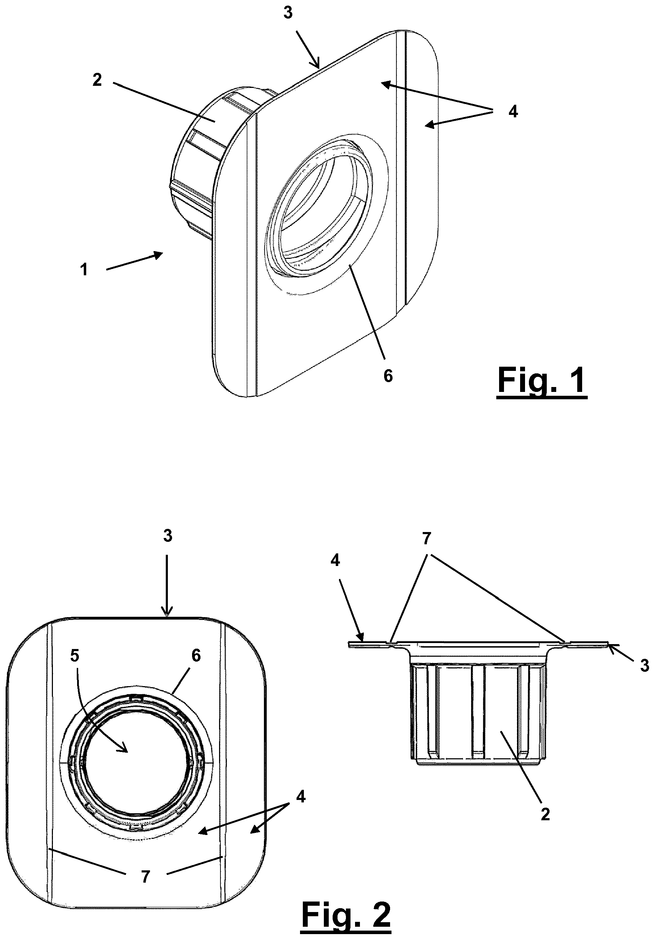

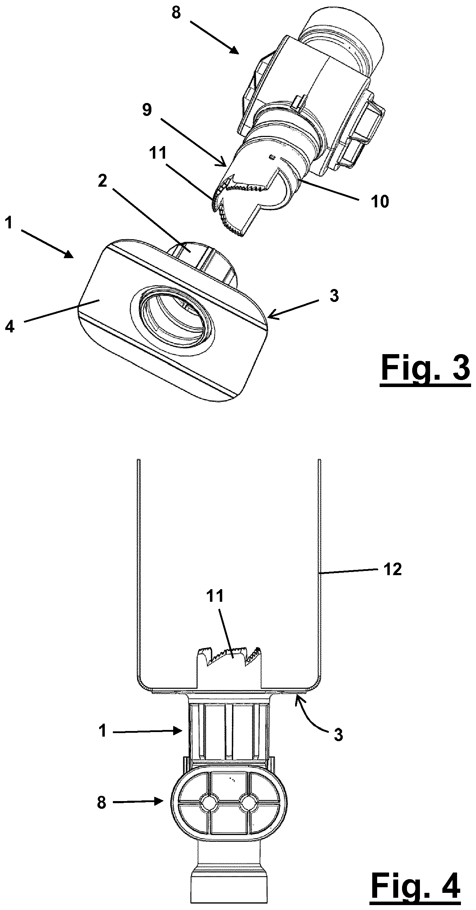

Die Fig. 1 zeigt eine räumliche Ansicht eines erfindungsgemässen Auslassstutzens 1. Der Auslassstutzen 1 hat ein zylinderartiges Auslassteil 2 mit einem Innengewinde und einen auskragenden Flansch 3 zur nicht-lösbaren Befestigung auf einem Schlauchbeutel [siehe Figuren 3,6,7]. Der Flansch 3 hat eine Kontaktfläche 4 die zu einer Schweiss- oder Klebeverbindung mit dem Schlauchbeutel vorgesehen ist und die einen Auslassstutzendurchlass 5 im Auslassteil 2 entlang einer kreisförmigen Umfangslinie 6 vollständig umgibt. Im vorliegenden Ausführungsbeispiel ist der Auslassstutzendurchlass 5 kreiszylindrisch, er könnte aber ebensogut auch anders geformt sein, beispielsweise quadratisch. Die Kontaktfläche 4 ist, hier in Übereinstimmung mit der Form des Flansches 3, rechteckförmig oder quadratisch und von genügender Grösse um eine zuverlässige Schweiss- oder Klebeverbindung mit dem Schlauchbeutel zu gewährleisten. Grundsätzlich könnten aber ebenfalls auch andere Formen, beispielsweise ovale, vorgesehen sein. Weiterhin hat der Flansch 3 beidseits beabstandet vom Auslassstutzendurchlass 5 je ein in einer Verlaufsrichtung parallel verlaufendes Folienscharnier 7. Das letztgenannte Merkmal ist wegen der vorgesehenen Befestigung am Rand eines im Wesentlichen rechteckförmigen Standard-Schlauchbeutels sinnvoll, weil dann auch mit weitgehend parallel zum Rand des Schlauchbeutels verlaufenden Biegestellen zu rechnen ist. Dieser Sachverhalt ist auch aus den Fig. 5-7 ersichtlich.

Die Fig. 2 zeigt den Auslassstutzen von Fig. 1 noch in einer Ansicht von unten und von der Seite.

Schliesslich zeigen die Figuren 1 und 2, dass die Kontaktfläche 4 die Umfangslinie 6 allseits um mindestens den Radius derselben überragt. Weiterhin ist auch ersichtlich, dass die Folienscharniere 7 näher an der Umfangslinie 6 als an einem äusseren Rand der Kontaktfläche 4 angeordnet sind. Im Übrigen ist der gezeigte Auslassstutzen 1 einstückig und aus Kunststoff.

Die Fig. 3 zeigt den Auslassstutzen 1 von Fig. 1 und eine auf den Auslassstutzen 1 dichtend aufsetzbare Einweg-Dosierpumpe 8 vor dem Zusammenbau. Ein an einem Einschraubteil 9 der Einweg-Dosierpumpe 8 angebrachtes Aussengewinde 10 passt zum früher bereits erwähnten Innengewinde des Auslassteils 2. Zudem ist das Einschraubteil 9 der Einweg-Dosierpumpe 8 mit einer Aufschneidvorrichtung 11 versehen. Beim Einschrauben des Einschraubteils 9 in den Auslassteil 2 am Schlauchbeutel wird das flexible Folienmaterial des Schlauchbeutels beabsichtigterweise an dieser Stelle im Auslassteil durchstossen oder durchschnitten. Auf diese Weise kann ein mit einem erfindungsgemässen Auslassstutzen versehener Schlauchbeutel geöffnet bzw. angezapft werden.

Die Fig. 4 zeigt den Auslassstutzen 1 von Fig. 1 an einem Schlauchbeutel 12 mit der eingeschraubten bzw. aufgesetzten Einweg-Dosierpumpe 8 von Fig. 3. Klar erkennbar ist hier, dass die Aufschneidvorrichtung 11 nunmehr ins Innere des Schlauchbeutels 12 ragt, von dem hier allerdings nur ein unterer Teil im Querschnitt gezeigt ist. Der Schlauchbeutel 12 ist in dieser Darstellung also zur Abgabe des Inhaltsstoffes geöffnet. Ebenfalls ersichtlich ist aus dieser Darstellung, dass der Auslassstutzen 1 am unteren Rand des Schlauchbeutels 12 angebracht ist. Erwartungsgemäss folgt das flexible Folienmaterial des Schlauchbeutels 12 nur gerade im Bereich der Kontaktfläche 4 der Form bzw. Kontur des Flansches 3, weil es mit diesem nicht-lösbar verbunden ist.

Die folgenden Ausführungen dienen der Veranschaulichung des Entstehens bzw. des Vermeidens des erwähnten Peeling-Effekts. Unter dem Peeling- oder Schäleffekt versteht man das mögliche Aufreissen der Schweiss- oder Klebeverbindung zwischen dem Auslassstutzen und dem flexiblen Folienmaterial des Schlauchbeutels an den Randstellen des Flansches, also an Stellen an denen eigentlich ebenfalls die grundsätzlich vorgesehene unlösbare Verbindung vorhanden sein müsste.

Die Fig. 5 zeigt einen Auslassstutzen ohne die erfindungsgemässen Merkmale zur Veranschaulichung des Peeling-Effekts P an den mit Hinweispfeilen bezeichneten Stellen.

Beim Aussaugen entstehende Knitterfalten am Schlauchbeutel oder beim Auspressen entstehende Verformungen können jedoch bewirken, dass sich der auf dem Schlauchbeutel aufgeschweisste oder aufgeklebte Flansch des Auslassstutzens, der in der Regel eine sehr viel höhere Steifigkeit aufweist als das flexible Folienmaterial des Schlauchbeutels, in den Randbereichen zumindest teilweise vom Schlauchbeutel weggeschält. Naturgemäss sind genau die Randbereiche des Flansches am stärksten gefährdet, weil die Schälkräfte dort am grössten sind und auch in ungünstigen Richtungen wirken. Unerwünschte Undichtigkeiten im Flanschbereich können die Folge sein.

Die Fig. 6 zeigt, in einer vergleichbaren Situation wie in der Fig. 5, den Auslassstutzen von Fig. 1 zur Veranschaulichung der erfindungsgemässen Vermeidung des Peeling-Effekts. Im Gegensatz zum durchgehend steifen Flansch der gängigen Lösung gemäss Fig. 5 können hier Aussenbereiche der Kontaktfläche 4 dank der Folienscharniere 7 die den Abschälvorgang auslösenden Bewegungen des flexiblen Folienmaterials des Schlauchbeutels weitgehend mitmachen und bleiben somit länger an demselben haften. Somit wird hier der Peeling- bzw. Schäleffekt stark reduziert und Undichtigkeiten im Flanschbereich können sehr wirksam vermieden werden.

Die Fig. 7 zeigt schliesslich den Auslassstutzen von Fig. 1 an einem Schlauchbeutel mit aufgesetzter Einwegpumpe von Fig. 3 zur weiteren Veranschaulichung der Vermeidung des Peeling-Effekts. Die Situation ist aber vergleichbar mit derjenigen von Fig. 6. Zusätzlich kann hier noch auf eine weitere vorteilhafte Wirkung der Folienscharniere 7 hingewiesen werden. Die Erfindung kann offensichtlich auch mithelfen, dass beim Aussaugvorgang kollabierendes flexibles Folienmaterial des Schlauchbeutels den Auslassstutzendurchlass nicht verschliesst und so die vollständige Entleerung des Schlauchbeutels nicht behindert.

Jedenfalls ist hier auch ersichtlich, dass Randbereiche der Kontaktfläche 3 zufolge der Scharnierwirkung der Folienscharniere 7 auch um einen Scharnierwinkel grösser 90° zum Schlauchbeutel 12 hin umklappbar sind oder sein können.

### Bezugsziffernliste:

- 1: Auslassstutzen
- 2: Auslassteil
- 3: Flansch
- 4: Kontaktfläche
- 5: Auslassstutzendurchlass
- 6: Umfangslinie
- 7: Folienscharnier
- 8: Einweg-Dosierpumpe
- 9: Einschraubteil
- 10: Aussengewinde
- 11: Aufschneidvorrichtung
- 12: Schlauchbeutel

- P: Peeling-Effekt

## Patentansprüche

1. Auslassstutzen (1) mit einem auskragenden Flansch (3) zur nicht-lösbaren Befestigung auf einem Schlauchbeutel (12), **wobei der Auslassstutzen zur Aufnahme einer aufschraubbaren Einweg-Dosierpumpe (8) mit einer Aufschneidevorrichtung (11) für den Schlauchbeutel (12) ausgebildet ist,** wobei der Flansch (3) eine zu einer Schweiss- oder Klebeverbindung mit dem Schlauchbeutel (12) ausgebildete Kontaktfläche (4) aufweist, die einen Auslassstutzendurchlass (5) entlang einer Umfangslinie (6) derselben umgibt, wobei die Kontaktfläche rechteckig oder quadratisch ist, **dadurch gekennzeichnet, dass** der Flansch (3) beidseits beabstandet vom Auslassstutzendurchlass (5) je ein in einer Verlaufsrichtung parallel verlaufendes Folienscharnier (7) aufweist und diese Folienscharniere (7) näher an der Umfangslinie (6) als an einem äusseren Rand der Kontaktfläche (4) angeordnet sind.

2. Schlauchbeutel mit einem Auslassstutzen nach Patentanspruch 1, **dadurch gekennzeichnet, dass** die Kontaktfläche (4) die Umfangslinie (6) allseits um mindestens den Radius der Umfangslinie überragt.

3. Schlauchbeutel mit einem Auslassstutzen nach Patentanspruch 1, **dadurch gekennzeichnet, dass** Randbereiche der Kontaktfläche (4) zufolge der Scharnierwirkung der Folienscharhiere (7) um einen Scharnierwinkel grösser 90° zum Schlauchbeutel (12) umklappbar sind.

## Claims

1. Outlet connector piece (1) with a protruding flange (3) for a non-releasable fixation on a tubular bag (12), wherein, for receiving a one-way dosing pump (8) that is capable of being screwed on, the outlet connector piece is implemented with a cut-open device (11) for the tubular bag (12), wherein the flange (3) comprises a contact surface (4) that is configured for a welding connection or adhesive connection with the tubular bag (12) and encompasses an outlet connector piece pass-through (59 along a circumferential line (6) of said contact surface (4), wherein the contact surface is rectangular or square,
**characterised in that** the flange (3) comprises, on both sides spaced apart from the outlet connector piece pass-through (5), respectively one film hinge (7) extending parallel in an extension direction, and that the film hinges (7) are arranged closer to the circumferential line (6) than to an outer edge of the contact surface (4).

2. Tubular bag with an outlet connector piece according to claim 1,
**characterised in that** the contact surface (4) extends beyond the circumferential line (6) on all sides at least by the radius of the circumferential line.

3. Tubular bag with an outlet connector piece according to claim 1,
**characterised in that,** due to the hinge effect of the film hinges (7), edge regions of the contact surface (4) are foldable backward towards the tubular bag (12) by a hinge angle that is greater than 90°.

## Revendications

1. Embout de sortie (1) avec un flasque saillant (3) pour une fixation non-relâchable sur un sachet tubulaire (12),
où l'embout de sortie (1), pour un accueil d'une pompe de dosage unidirectionnelle (8) qui peut être vissée dessus, l'embout de sortie est formé avec un dispositif de coupage (11) pour le sachet tubulaire (12),
où le flasque (3) comporte une surface à contact (4) configurée pour un raccordement de soudage ou de collage avec le sachet tubulaire (12) et entourant un passage d'embout de sortie (5) le long d'une ligne circonférentielle (6) de ladite surface à contact (4),
où la surface à contact est rectangulaire ou quadratique,
**caractérisé en ce que** le flasque (3) comporte, espacées du passage d'embout de sortie (5) sur les deux côtés, respectivement une charnière-film (7), chacune desdites charnières-film (7) s'étendant parallèlement dans une direction de passage et étant disposée plus prochainement à la ligne circonférentielle (6) qu'à un bord périphérique de la surface à contact (4).

2. Sachet tubulaire avec un embout de sortie selon la revendication 1,
**caractérisé en ce que** la surface à contact (4) dépasse la ligne circonférentielle (6) sur tous les côtés par au moins le radius de la ligne circonférentielle.

3. Sachet tubulaire avec un embout de sortie selon la revendication 1,
**caractérisé en ce qu',** en raison de l'effet de charnière des charnières-film (7), des zones périphériques de la surface à contact (4) sont rabattables vers le sachet tubulaire (12) par un angle-charnière de plus de 90°.
